# EUROPÄISCHE PATENTANMELDUNG

(11) **EP 1 780 581 A1**
(43) Veröffentlichungstag der Anmeldung: **02.05.2007**
(21) Anmeldenummer: 05110129.3
(22) Anmeldetag: 28.10.2005
(51) Int. Cl.: G02F 1/01, H04N 9/31

(54) **Steuerbares Lichtmodulatorelement und Vorrichtung zur Verwendung**

(71) Anmelder: Prochnow, Uwe, 45239 Essen (DE)
(72) Erfinder: Prochnow, Uwe, 45239 Essen (DE)
(74) Vertreter: Hanewinkel, Lorenz

(57) **Zusammenfassung**

Die Erfindung betrifft einen steuerbaren Lichtmodulator (M), der durch die Intensität von elektrischen Feldern in seiner Transmission steuerbar ist, wobei er mit einem intensitätsgesteuerten Mikrowellenfeld beaufschlagt ist. Weiterhin wird eine Vorrichtung zur Laserprojektion dargestellt, die mit einem solchen Lichtmodulator gesteuert ist.

## Beschreibung

Die Erfmdung betrifft ein steuerbares Lichtmodulatorelement einem durch die Intensität von elektromagnetischen Feldern in seiner Lichttransmission steuerbaren Lichtdurchlass und dessen Verwendung, insbesondere in einem Farbbildgeber.

Es ist bekannt, Licht durch ein polarisierbares Medium, dessen Polarisationseigenschaften durch ein elektrisches oder magnetisches Feld veränderbar sind, eine so genannte Kerr-Zelle, und durch ein unveränderliches Polarisationsfilter zu leiten, wodurch abhängig von der Steuerung der Zelle, mehr oder weniger Licht diese Polarisatoren passiert. Derartige Kerr-Zellen benötigen hohe elektrische Steuerspannungen oder starke magnetische Felder, deren Erzeugung relativ aufwendig ist, und sie schalten erheblich verzögert in ihren Ausgangszustand zurück, wenn die elektrische oder magnetische Erregung zurückgenommen wird. Zudem tritt eine erhebliche Energieumsetzung in dem Medium auf, wenn die Erregung mit hoher Frequenz verändert wird.
Weiterhin ist bekannt, Farbbildgeber mittels dreier verschiedenfarbiger intensitätsgesteuerter Lichtquellen zu betreiben, deren Licht über bewegte X-Y-Ablenksysteme auf einer Bildwand überlagert dargestellt werden.
Weiterhin sind Feststoffe bekannt, die z.B. in Schweißer-Schutzbrillen eingesetzt werden, welche durch einfallendes Licht je nach dessen Intensität gedämpft werden, so dass bei zunehmender Lichtintensität ihre Transmission stark abnimmt. Dieser Effekt ist mit einem sehr geringen Relaxationswert behaftet. Anfallende Lichtblitze passieren eine derartige Scheibe nicht, sie ist anschließend aber wieder transparent.

Es ist Aufgabe der Erfindung, einen steuerbaren Hochgeschwindigkeits-Lichtmodulator zu schaffen

Die Lösung besteht darin, dass das Lichtmodulatorelement an seinem Lichtdurchlass mit einem intensitätsgesteuerten Mikrowellenfeld beaufschlagt ist.

Vorteilhafte Ausgestaltungen und Verwendungen sind in den Unter- und Nebenansprüchen angegeben.

Das neuartige Lichtmodulatorelement eignet sich insbesondere zur Steuerung der Intensität eines Laserstrahles. Das Modulatorelement lässt sich wegen des geringen Durchmessers eines Laserstrahls miniaturisieren.
Der Lichtdurchlass des Lichtmodulatorelements besteht aus Glas, dessen Transmissionseigenschaft durch die Intensität eines elektromagnetischen Wechselfeldes steuerbar ist. Die Frequenz und Stärke des Wechselfeldes ist dabei von Herstellungsparametem des Glases abhängig. Bisher werden solche Gläser in Brillen ausgenutzt, bei denen die Lichtdurchlässigkeit (Transmission) von der eingestrahlten Helligkeit abhängig ist, etwa bei Sonnen- oder Schweißerbrillen. Nun kann ein solches Glas auch so hergestellt sein, dass anstelle von Licht elektromagnetische Felder mit einer bestimmten Frequenz, die niedrigerer als die Frequenz von Lichtstrahlen ist, die Transmission steuern. Diese Frequenz liegt typischerweise zwischen 5 und 100 GHz. Die Transmission des Glases ist direkt von der angelegten Feldstärke abhängig. Somit können auch Felder von Mikrowellen den Lichtmodulator in seiner Transmission steuern.
Vorzugsweise werden Mikrowellenantennen paarweise ein- oder beidseitig des Modulatorelements angeordnet. Besonders bewährt hat sich eine zirkulare Anordnung von Antennen wechselnder Polarität. Dadurch entsteht z.B. ein Quadrupolfeld, ein Octopolfeld oder dergleichen um einen zentralen Lichtdurchlass, welcher nur etwas größer als der zu modulierende Lichtstrahl zu sein braucht.
In einer anderen Ausführung ist das Glas als zylindrisch geformt und die Antennenelektroden sind als Ringe um den Glaszylinder gelegt.
Für eine Mikrowellenfrequenz von z.B. 50 GHz sind die Elektroden nur millimetergroß. Vorzugsweise sind die Elektrodenpaare Teile von Kondensatoren, die mit rund um das Modulatorelement angeordneten Induktivitäten Schwingkreisen bilden. Aufgrund der geringen Dicke der Scheibe und dem geringen Abstand der Elektroden entstehen dabei im Glas hohe Feldstärken.
Die Feldstärken im zentralen Lichtdurchlass werden weiter erhöht, wenn die Schwingkreise so phasenversetzt angesteuert sind, dass die jeweilige Maximalphase um den zentralen Lichtdurchlass rotiert.
Der Lichtmodulator ist bei einem entsprechenden Aufbau mit Frequenzen bis zu
180 GHz betreibbar. Dabei kann diese Frequenz als Trägerfrequenz dienen, die mit einer Steuerfrequenz moduliert ist.
Ein 50 GHz-Generator lässt sich beispielsweise mit einer Steuerfrequenz von 5 GHz in seiner Intensität steuern, und dieser Frequenz folgt auch die Transmission des Lichtmodulatorelementes für einen Licht- oder Laserstrahl. Auf diese Weise gesteuert kann ein Strahl eines kontinuierlich betriebenen Lasers vielfältig verwendet werden, z.B. zur analogen oder digitalen Nachrichtenübertragung, Zur Informationsaufzeichnung, zur Materialbearbeitung oder, wie noch näher beschrieben, zur Bilddarstellung. Dies Art und Weise der Modulation eines kontinuierlich betriebenen Lasers vermeidet alle bekannten Nachteile von gepulst betriebenen Lasern.

Für einen monochromen Bildgeber wird ein Laserstrahl unmittelbar oder durch ein Filter farblich, z.B. in weißes Licht, verändert durch das Lichtmodulatorelement geleitet und anschließend nacheinander auf zwei rotierende Prismenspiegel zur X-und Y-Ablenkung geschickt, von wo er auf eine Projektionsfläche fällt, auf der der Lichtmodulation gemäß ein Bild entsteht. Erfolgt die Modulation der steuernden Mikrowelle mit einem monochromen Videosignal und werden die rotierenden Prismenspiegel synchronisiert mit dem Zeilen- und Bildwechselsignal betrieben, so wird ein Videobild wiedergegeben.
In entsprechender Weise wird ein Farbfernsehbild erzeugt, wenn je ein modulierter Strahl dreier verschiedenfarbiger Laser überlagert den Prismen zugeführt wird, wobei die Modulation entsprechend den Farbsignalen erfolgt, d.h. die Mikrowellenenergie wird um so niedriger gehalten, je höher das jeweilige Farbsignal ist.

Vorteilhaft wird zusätzlich ein weißer Lichtstrahl gemäß einem Luminanzsignal moduliert und den drei Farblaserstrahlen vor den Prismen beigemischt. Der weiße Lichtstrahl wird in einfacher bekannter Weise aus einem blauen Laserstrahl durch eine Modifikation in einem Gelbfilter gewonnen. Diese zusätzliche Beimischung eines Luminanzsignals erlaubt es, die Helligkeit eines projizierten Bildes zu steuern, ohne die Leistung der Farblaser zu verändern. Damit werden bei Helligkeitsveränderungen die Farbverschiebungen durch die Nichtlinearitäten in den Lasern vermieden.

Ein kompletter Farbbildprojektor dieser Art ist in einem 3 cm dicken Gehäuse mit DIN A5-Abmessung untergebracht und leistet cirka 15 k Lumen. Durch die erreichbare hohe Modulationsfrequenz von 5 GHz lassen sich Bilder mit 10 Megapixel bei einer Bildfolgeftequenz von 250 Hz in bisher unerreichter Qualität und Brillanz erzeugen.

In den Figuren ist eine Ausführungen der Erfmdung beispielhaft dargestellt.
Fig. 1 zeigt eine schematische Ansicht eines Lichtmodulators
Fig. 2 zeigt eine erste Elektrodenanordnung
Fig. 3 zeigt eine zweite Elektrodenanordnung

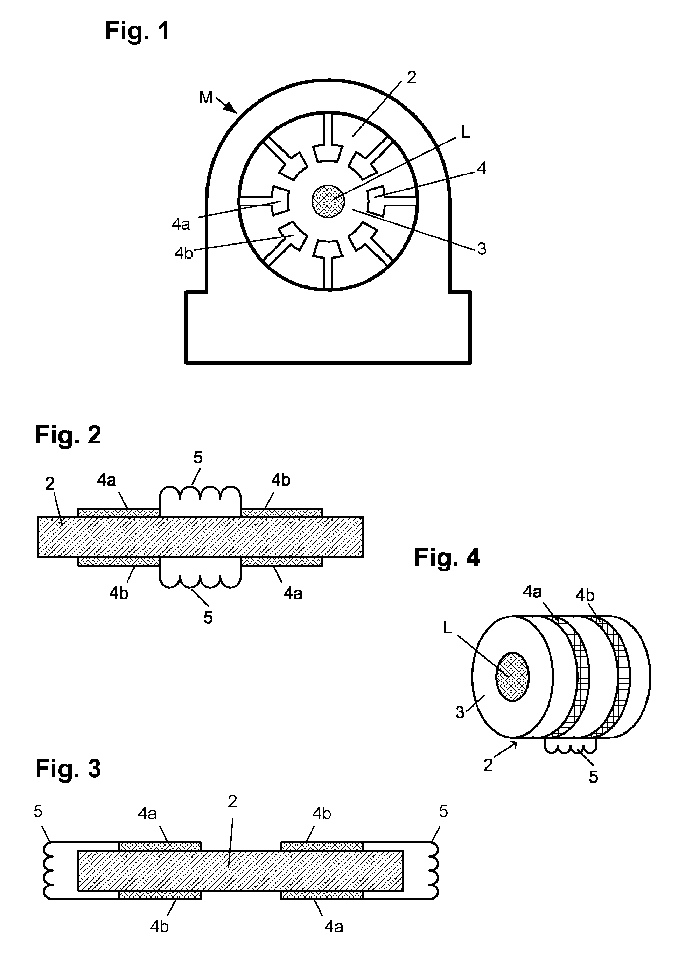

Fig. 3 zeigt eine zylinderförmige Anordnung
Fig. 4 zeigt einen Lichtmodulator mit Generator

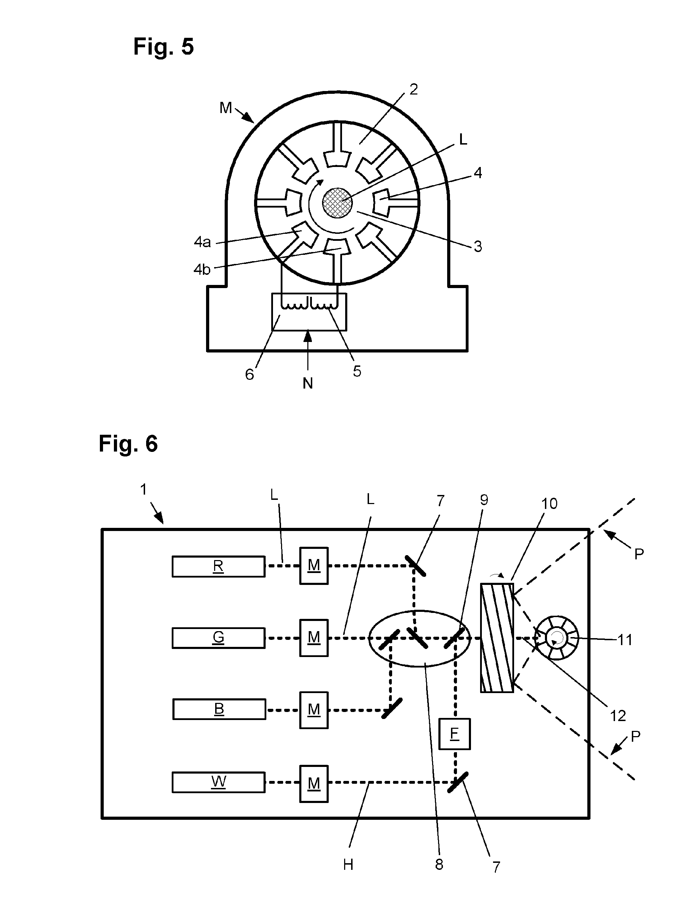

Fig. 5 zeigt schematisch einen Laserprojektor

In Fig. 1 ist schematisch ein Lichtmodulator M dargestellt, in dem zentrisch eine Scheibe 2 gefasst ist. Im Lichtdurchlassbereich 3 passiert ein Laserstrahl L die Scheibe. Auf der Scheibe 2 sind zirkular die Antennenelektroden 4 angeordnet, wobei immer zwei Elektroden 4a, 4b ein Elektrodenpaar bilden. Über diese Elektroden 4a, 4b, die Teil eines Mikrowellenschwingkreises sind, wird die elektrische Feldstärke in das Glas 2 eingebracht und die Transmission des Glases 2 gesteuert.
Weiterhin dienen die Elektroden 4 dazu, Verlustwärme aus dem Glas abzuführen.

In Fig. 2 ist eine erste Anordnung von Elektroden 4a, 4b auf der Scheibe 2 dargestellt. In dieser Anordnung befindet sich ein Paar der Elektroden 4a, 4b auf jeweils einer Seite des Glases 2 und bildet zusammen mit der Induktivität 5 einen Mikrowellenschwingkreis. Da sich auf der gegenüberliegenden Seite ebenfalls ein Schwingkreis befindet, bildet sich ein Quadrupolfeld aus.
Es ist ebenso möglich, dass sich die Elektroden 4a, 4b nur auf einer Seite des Glases 2 befinden und sich dann Dipolfelder bilden.

In Fig. 3 ist eine zweite Anordnung von Elektroden 4a, 4b auf der Scheibe 2 dargestellt. In dieser Anordnung befindet sich ein Paar der Elektroden 4a, 4b auf jeweils gegenüberliegend auf dem Glas 2 und bildet zusammen mit der Induktivität 5 einen Mikrowellenschwingkreis. Da sich danebenliegend ebenfalls Schwingkreise befinden, bildet sich ein vielpoliges Feld aus.

In Fig. 4 ist ein Lichtmodulatorelement in Zylinderform dargestellt. Die beiden Antennenelektroden 4a und 4b sind ringförmig um den Glaszylinder gelegt. Sie bilden die Platten eines Kondensators, der mit der angedeuteten Induktivität 5 einen Schwingkreis bildet und zwischen dessen Elektroden sich ein entsprechendes Wechselfeld ausbildet. Dieses Wechselfeld steuert den Laserstrahl L, der axial durch den Glaszylinder 2 geführt ist.

In Fig. 5 ist noch einmal die schematische Ansicht des Modulators M entsprechend Fig. 1 gezeigt. Die Elektroden 4 auf der Scheibe 2 werden von entsprechend vielen Generatoren 6 angesteuert, von denen nur einer dargestellt ist. Jeder Generator 6 speist einen Schwingkreis mit den Induktivitäten 5 und den Elektroden 4a, 4b. Die Intensität des erzeigten Mikrowellenfeldes wird entsprechend dem Nutzsignal N gesteuert. Dabei sind die Generatoren 6 so in der Phase gesteuert, dass sich ein rotierendes Feld auf der Scheibe 2 ausbildet, hier durch einen Pfeil dargestellt. Dieses rotierende Feld erzeugt eine gleichmäßige Steuerung der Transmission in dem Lichtdurchlass 3 für den Laserstrahl L.

In Fig. 6 ist schematisch ein Projektor 1 mit Farblasern R, G, B, W und den Modulatoren M dargestellt. Die Modulatoren M für die Farblaser R, G, B, werden auf bekannte Weise entsprechend den Farbsignalen eines Bildes angesteuert (hier nicht dargestellt) und über Spiegel 7 und Prismen in der Lichtsummation 8 zu einem Farbstrahl zusammengefasst. Der Strahl des Lasers W, der zunächst blau ist, wird entsprechend einem Helligkeitssignal in dem zugehörigen Modulator M moduliert. Dieses Helligkeitssignal H wird in einem Filter F zu einem weißen Strahl umgeformt und über das Prisma 9 ebenfalls in den Farbstrahl 12 eingekoppelt. Durch entsprechende Modulation des Helligkeitssignals H lässt sich die Helligkeit des erzeugten Bildes einstellen, ohne an dem Abgleich der Farblaser R, G, B nachzustellen.
Der Farbstrahl 12 wird auf bekannte Weise über die rotierende Prismenspiegelwalze 11 horizontal und über die rotierende Prismenspiegelwalze 10 vertikal abgelenkt. Dabei sind die Prismenflächen so schräg gestellt, dass sich ein gerader Verlauf des Projektionsstrahls P auf der Projektionsfläche ergibt.

### Bezugszeichenliste

- 1: Projektor
- 2: Scheibe
- 3: Lichtdurchlass
- 4: Elektrode
- 4a: erste Elektrode
- 4b: zweite Elektrode
- 5: Induktivität
- 6: Generator
- 7: Spiegel
- 8: Lichtüberlagerung
- 9: Luminanzeinkopplung
- 10: Vertikalprismenspiegelwalze
- 11: Horizontalprismenspiegelwalze
- 12: Überlagerter Strahl

- B: Blauer Laser
- F: Filter
- G: Grüner Laser
- H: Helligkeitssignal
- L: Laserstrahl
- M: Lichtmodulator
- N: Nutzsignal
- P: Projektionsstrahl
- R: Roter Laser
- W: weißer Laser

## Patentansprüche

1. Lichtmodulator (M) mit einem durch die Intensität von elektromagnetischen Feldern in seiner Lichttransmission steuerbaren Lichtdurchlass, **dadurch gekennzeichnet, dass** er mit einem intensitätsgesteuerten Mikrowellenfeld beaufschlagt ist.

2. Lichtmodulator nach Anspruch 1, **dadurch gekennzeichnet, dass** der Lichtdurchlass aus Glas besteht.

3. Lichtmodulator nach Anspruch 2, **dadurch gekennzeichnet, dass** das p Glas so hergestellt ist, dass die Lichttransmissionseigenschaft im Wesentlichen von einem angelegten Mikrowellenfeld in einem bestimmten Frequenzbereich abhängt.

4. Lichtmodulator nach Anspruch 3, **dadurch gekennzeichnet, dass** das Mikrowellenfeld eine bestimmte Frequenz zwischen 5 und 180 GHz besitzt.

5. Lichtmodulator nach Anspruch 4, **dadurch gekennzeichnet, dass** die Mikrowellenfrequenz als Trägerfrequenz dient, die bis zu einer Frequenz amplitudenmoduliert wird, die etwa eine Größenordnung unter der Mikrowellenfrequenz liegt.

6. Lichtmodulator nach Anspruch 2, **dadurch gekennzeichnet, dass** er eine Anordnung von paarweise auf einer Glasseite oder verschiedenen Glasseiten um den Lichtdurchlass (3) mit wechselnder Polarität angeordneten Mikrowellenantennen (4a, 4b) aufweist.

7. Lichtmodulator nach Anspruch 6, **dadurch gekennzeichnet, dass** der Lichtdurchlass (3) einen Durchmesser hat, der etwas größer als der eines zu modulierenden Laserstrahles ist

8. Lichtmodulator nach Anspruch 6, **dadurch gekennzeichnet, dass** die flächigen Antennenelektroden (4a, 4b) als Kondensatoren mit randseitig zum Glas angeordneten Induktivitäten (5) Schwingkreise bilden.

9. Lichtmodulator nach Anspruch 6, **dadurch gekennzeichnet, dass** die Phase der Wellen in den Schwingkreisen um den Lichtdurchlass (3) rotiert.

10. Lichtmodulator nach Anspruch 8, **dadurch gekennzeichnet, dass** das Glas als Zylinder ausgebildet ist und die Antennenelektroden (4a, 4b) ringförmig um den Zylinder gelegt sind.

11. Vorrichtung mit einem Lichtmodulator nach einem der vorstehenden Ansprüche, **dadurch gekennzeichnet, dass** sie mit einem Laserstrahl (L) beaufschlagt ist, dessen moduliertes Licht einer Nachrichtenübermittlungsvorrichtung mit einem Lichtdetektor oder einem Lichtaufzeichnungsgerät, einer Materialbearbeitungsvorrichtung oder einer Projektionsvorrichtung zugeführt ist.

12. Vorrichtung nach Anspruch 11, **dadurch gekennzeichnet, dass** der modulierte Laserstrahl (L) einer X- und Y-Ablenkvorrichtung (10, 11) zugeführt und von dieser auf eine Projektionsfläche gelenkt ist.

13. Vorrichtung nach Anspruch 12, **dadurch gekennzeichnet, dass** die Ablenkvorrichtung aus zwei verspiegelten prismatischen Walzen (10, 11) besteht.

14. Vorrichtung nach einem der Ansprüche 11 -13, **dadurch gekennzeichnet, dass** mehrere Lichtmodulatoren (M) mit jeweils einem Laser (R, G, B) unterschiedlicher Farbe beaufschlagt sind die so entstehenden modulierten Laserstrahlen (L) überlagert der Ablenkvorrichtung (10, 11) zugeführt werden.

15. Vorrichtung nach Anspruch 14, **dadurch gekennzeichnet, dass** die Laser (R, G, B) Licht mit mindestens drei Grundfarben aussenden.

16. Vorrichtung nach Anspruch 15, **dadurch gekennzeichnet, dass** die drei Laser (R, G, B) jeweils entsprechend einem der RGB-Signale eines Videosignales moduliert werden.

17. Vorrichtung nach einem der Ansprüche 14 bis 16, **dadurch gekennzeichnet, dass** ein weitere Lichtmodulator (M) mit einem weißen Lichtstrahl (H) beaufschlagt ist, der entsprechend einem Luminanzsignal moduliert wird.

18. Vorrichtung nach Anspruch 17, **dadurch gekennzeichnet, dass** die Helligkeit der Projektion über die Intensität des weißen Lichtstrahls (H) gesteuert ist.

19. Vorrichtung nach Anspruch 17, **dadurch gekennzeichnet, dass** der weiße Lichtstrahl (H) aus einem blauen Laserstrahl durch Transformation in einem Filter (F) erzeugt wird.
